# EUROPEAN PATENT APPLICATION

(11) **EP 2 151 789 A1**
(43) Date of publication of application: **10.02.2010**
(21) Application number: 08764836.6
(22) Date of filing: 29.05.2008
(51) Int. Cl.: G06K 17/00, B42D 15/10, G01C 21/00, G06F 13/00, G09B 29/00, G09B 29/10, G09F 19/00

(54) **IC CARD RECEPTACLE, DISPLAY METHOD, DATA PROVIDING SYSTEM, SERVER DEVICE, AND DATA PROVIDING METHOD**

(30) Priority: 29.05.2007 JP 2007141505
(71) Applicant: Sony Corporation, Tokyo 108-0075 (JP)
(72) Inventor: ITO, Taiji, Tokyo 108-0075 (JP); FUKUSHIMA, Takashi, Tokyo 108-0075 (JP); SAKO, Yoichiro, Tokyo 108-0075 (JP); AKAGI, Tadao, Tokyo 108-0075 (JP); MATSUMOTO, Jun, Tokyo 108-0075 (JP); YOSHII, Shoji, Tokyo 108-0075 (JP); ABE, Miki, Tokyo 108-0075 (JP); ASUKAI, Masamichi, Tokyo 108-0075 (JP); SANO, Akane, Tokyo 108-0075 (JP); TAKEHARA, Mitsuru, Tokyo 108-0075 (JP)
(74) Representative: Carlick, Anthony Julian
(86) International application number: PCT/JP2008/059867
(87) International publication number: WO 2008/146872

(57) **Abstract**

The present invention relates to an IC-card holding apparatus, a display method, a data providing system, a server apparatus, and a data providing method capable of improving the availability, the convenience, and the usefulness of a non-contact IC card.

The IC-card holding apparatus communicates with the non-contact IC card held therein to read out information from the non-contact IC card. This allows the IC-card holding apparatus to obtain the type of the non-contact IC card held therein and usage history information. After determining the type of the non-contact IC card, the IC-card holding apparatus displays an image (type corresponding image) corresponding to the type to present the type of the non-contact IC card held therein. And, the usage history can be read out to display the readout usage history. At this time, for example, information (place name or shop name) about a position where the non-contact IC card is used is also displayed and/or the use position is presented on the map image. And, provided data is received from a server apparatus in accordance with the current position or the type of the non-contact IC card to display the provided data.

## Description

### Technical Field

The present invention relates to an integrated circuit (IC)-card holding apparatus capable of holding a non-contact IC card and a display method in the IC-card holding apparatus. The present invention also relates to a data providing system including an IC-card holding apparatus and a server apparatus, a server apparatus, and a data providing method in the server apparatus.

### Background Art

Patent Document 1: Japanese Unexamined Patent Application Publication No. 2005-31803
Patent Document 2: Japanese Unexamined Patent Application Publication No. 2000-11251
Patent Document 3: Japanese Unexamined Patent Application Publication No. 11-252157

A variety of data communication in close ranges using non-contact IC cards is put into practical use. For example, non-contact IC cards are practically used as tickets for railways and others. Specifically, a reader-writer for a non-contact IC card is provided at a ticket gate, and the non-contact IC card is made close to the reader-writer when the non-contact IC card passes through the ticket gate to read out data stored in the non-contact IC card for authentication and so on.
And, non-contact IC cards are used as, for example, electronic money cards and personal identification cards, such as employee identification cards, in addition to the tickets.
When a non-contact IC card for electronic money is used, communication is taken place in which the non-contact IC card is held over a reader-writer provided in a shop upon purchase of an article to, for example, withdraw the purchased amount from the amount of money charged in the non-contact IC card.

### Disclosure of Invention

### Technical Problem

Such non-contact IC cards are in widespread use and a wide variety of non-contact IC cards are provided depending on applications and services. And, for example, in the case of non-contact IC cards having electronic money functions, general users are capable of using the non-contact IC cards as alternates for wallets to improve the convenience.
And, it is required to further improve the convenience in possession and usage of the non-contact IC cards as the non-contact IC cards are more heavily used.

Accordingly, an object of the present invention is to improve the convenience of users of non-contact IC cards. More particularly, an object of the present invention is to allow easy confirmation of the usage histories and the use positions of IC cards for each type and to allow reception of information corresponding to the type of each non-contact IC card that is possessed.

### Technical Solution

An IC-card holding apparatus of the present invention includes holding means for holding an non-contact IC card; IC-card communication means for communicating with the non-contact IC card held in the holding means; display means; position detecting means for detecting position information; and control means for causing the display means to display information generated on the basis of the position information detected by the position detecting means and information read out from the non-contact IC card held in the holding means by the IC-card communication means.
The holding means is capable of holding one or more non-contact IC cards.

And, the IC-card holding apparatus further includes type-corresponding-image storage means for storing an image corresponding to each type of the non-contact IC card. The control means determines the type of the held non-contact IC card on the basis of the information read out from the non-contact IC card held in the holding means by the IC-card communication means and reads out an image corresponding to the determined type from the type-corresponding-image storage means to cause the display means to display the image.
And, the IC-card holding apparatus further includes position-history storage means for storing position history information. The control unit causes the position-history storage means to store the position information detected by the position detecting means along with date and time information as the position history information, and the control unit uses usage history information read out from the non-contact IC card held in the holding means by the IC-card communication means and the position history information stored in the position-history storage means to cause the display means to display a usage-history-information image to which the position information is added.
And, the IC-card holding apparatus further includes position-history storage means for storing position history information; and map-data storage means for storing map data. The control unit causes the position-history storage means to store the position information detected by the position detecting means along with date-and-tie information as the position history information, and the control unit uses usage history information read out from the non-contact IC card held in the holding means by the IC-card communication means, the position history information stored in the position-history storage means, and the map data stored in the map-data storage means to cause the display means to display a use position of the non-contact IC card on a map image.
And, the IC-card holding apparatus further includes external communication means for communicating with an external server apparatus. The control unit causes the external communication means to transmit a data request to the server apparatus, the data request at least including the position information detected by the position detecting means and type information about the non-contact IC card determined on the basis of information read out from the non-contact IC card held in the holding means by the IC-card communication means, and causes the display means to display an image based on provided data in response to reception of the provided data transmitted from the server apparatus in response to the data request by the external communication means.

In addition, an IC-card holding apparatus of the present invention includes holding means for holding a non-contact IC card; IC-card communication means for communicating with the non-contact IC card held in the holding means; display means; type-corresponding-image storage means for storing an image corresponding to each type of the non-contact IC card; and control means for determining the type of the held non-contact IC card on the basis of information read out from the non-contact IC card held in the holding means by the IC-card communication means and reading out an image corresponding to the determined type from the type-corresponding-image storage means to cause the display means to display the image.

A display method of the present invention, for an IC-card holding apparatus holding a non-contact IC card, includes a step of detecting position information; a step of communicating with the non-contact IC card held in the holding means; and a step of generating or acquiring information to be displayed on the basis of the position information and information read out through the communication with the non-contact IC card to display an image corresponding to the generated or acquired information.
In addition, a display method of the present invention, also for an IC-card holding apparatus holding a non-contact IC card, includes a step of communicating with the non-contact IC card held in the holding means; a step of determining a type of the held non-contact IC card on the basis of information read out through the communication with the non-contact IC card; and a step of displaying a type corresponding image corresponding to the determined type.

An information providing system of the present invention includes an IC-card holding apparatus and a server apparatus. And, the IC-card holding apparatus includes holding means for holding an non-contact IC card; IC-card communication means for communicating with the non-contact IC card held in the holding means; display means; position detecting means for detecting position information; external communication means for communicating with the external server apparatus; and control means for causing the external communication means to transmit a data request to the server apparatus, the data request at least including the position information detected by the position detecting means and type information about the non-contact IC card determined on the basis of information read out from the non-contact IC card held in the holding means by the IC-card communication means, and causing the display means to display an image based on provided data in response to reception of the provided data transmitted from the server apparatus in response to the data request by the external communication means. And, the server apparatus includes communication means for communicating with the IC-card holding apparatus; storage means for storing the provided data; and control means for, in response to reception of the data request from the IC-card holding apparatus by the communication means, selecting a piece of provided data to be transmitted from the pieces of provided data stored in the storage means by using the position information and the type information included in the data request and causing the communication means to transmit the selected provided data to the IC-card holding apparatus.

A server apparatus of the present invention includes communication means; storage means for storing provided data; and control means for, in response to reception of a data request from an external apparatus by the communication means, selecting a piece of provided data to be transmitted from the pieces of provided data stored in the storage means by using position information and type information about a non-contact IC card included in the data request and causing the communication means to transmit the selected provided data to the external apparatus.
A data providing method of the present invention includes a step of receiving a data request from an external apparatus; a step of selecting provided data to be transmitted by using position information and type information about a non-contact IC card included in the data request; and a step of transmitting the selected provided data to the external apparatus.

In other words, according to the present invention described above, the IC-card holding apparatus is capable of communicating with the non-contact IC card held therein to read out information from the non-contact IC card. This allows the IC-card holding apparatus to obtain the type of the non-contact IC card held therein and information about the usage history.
After determining the type of the non-contact IC card, the IC-card holding apparatus is capable of displaying an image (type corresponding image) corresponding to the type to present the type of the non-contact IC card held therein.
And, the usage history can be read out to display the readout usage history. At this time, it is possible to also display, for example, information (place name or shop name) of a position where the non-contact IC card is used and/or to present the use position on the map image.
And, it is also possible to perform a process to receive the provided data from the server apparatus in accordance with the current position or the type of the non-contact IC card.

### Advantageous Effects

According to the present invention, it is possible to improve the availability, the convenience, and the usefulness of one or more non-contact IC cards with the IC-card holding apparatus.
First, the IC-card holding apparatus itself determines the type of the non-contact IC card held therein to display a type corresponding image. Accordingly, the user can immediately know the type of the held non-contact IC card and there is no need to take the trouble to confirm the type, for example, when the user uses the non-contact IC card.
In addition, since the usage history of the non-contact IC card is displayed along with the position information, it is preferable in a case in which the user attempts to confirm the usage history.
In addition, since the provided data is received from the server apparatus in accordance with the current position or the type of the non-contact IC card, for example, the user can receive the provided data useful for the user, such as data indicating advertisement of a shop where the non-contact IC card possessed by the user (held in the IC-card holding apparatus) can be used or a coupon for the shop. Brief Description of Drawings

[Fig. 1] Fig. 1 illustrates an appearance example of a mobile card reader according to an embodiment of the present invention.
[Fig. 2] Fig. 2 includes diagrams illustrating usage states of the mobile card reader according to the embodiment.

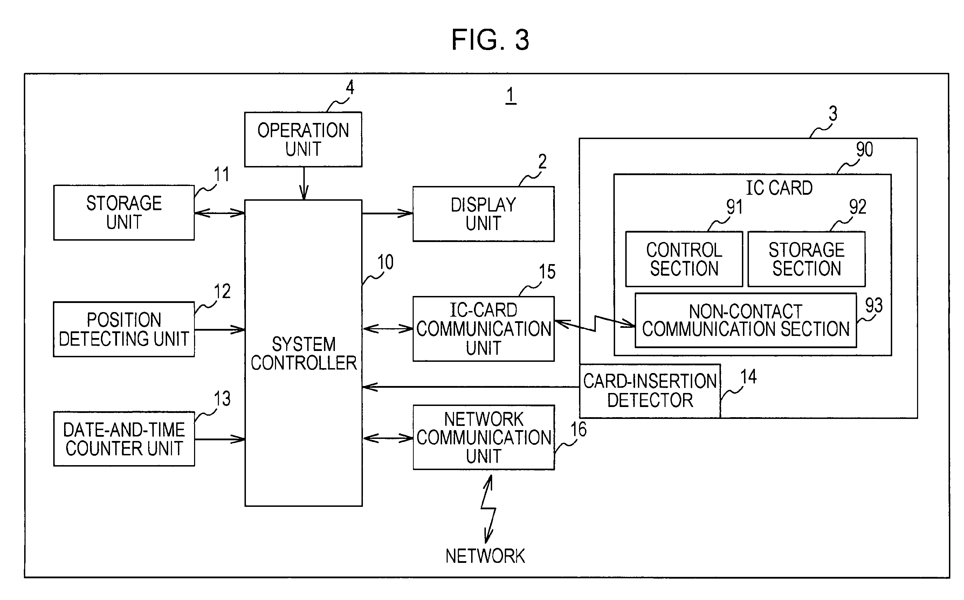

[Fig. 3] Fig. 3 is a block diagram showing the configurations of the mobile card reader according to the embodiment and a non-contact IC card.
[Fig. 4] Fig. 4 is a block diagram of a server apparatus according to an embodiment.
[Fig. 5] Fig. 5 is a flowchart of a process when the non-contact IC card is inserted, according to an embodiment.
[Fig. 6] Fig. 6 includes diagrams illustrating main images according to embodiments.
[Fig. 7] Fig. 7 is a flowchart of a storage process of position history data according to an embodiment.
[Fig. 8] Fig. 8 is a flowchart of a display process of a usage history according to an embodiment.
[Fig. 9] Fig. 9 includes diagrams illustrating display examples of the usage history according to embodiments.
[Fig. 10] Fig. 10 is a flowchart of a process to display provided data according to an embodiment.
[Fig. 11] Fig. 11 includes diagrams illustrating display examples of the provided data according to embodiments.

### Explanation of Reference Numerals

1 mobile card reader, 2 display unit, 2a display panel section, 3 holding unit, 4 operation unit, 10 system controller, 11 storage unit, 12 position detecting unit, 13 date-and-time counter unit, 14 card-insertion detector, 15 IC-card communication unit, 16 network communication unit, 70 server apparatus, 72 server controller unit, 73 communication unit, 74 information managing unit, 77 image database, 78 contractor-information storage unit, 90 non-contact IC card

### Best Modes for Carrying Out the Invention

Embodiments of an IC-card holding apparatus, a display method, a data providing system, a server apparatus, and a data providing method of the present invention will herein be described. The IC-card holding apparatus is exemplified by a mobile card reader here.
The description is offered in the following order:
[1. Appearance examples and usage examples of mobile card reader]
[2. Configurations of mobile card reader, non-contact IC card, and server apparatus]
[3. Determination of type of non-contact IC card and display operation of type corresponding image]
[4. Position history storage process]
[5. Usage history display operation]
[6. Provided data display operation]
[7. Advantages of embodiments and modification examples]

### [1. Appearance examples and usage examples of mobile card reader]

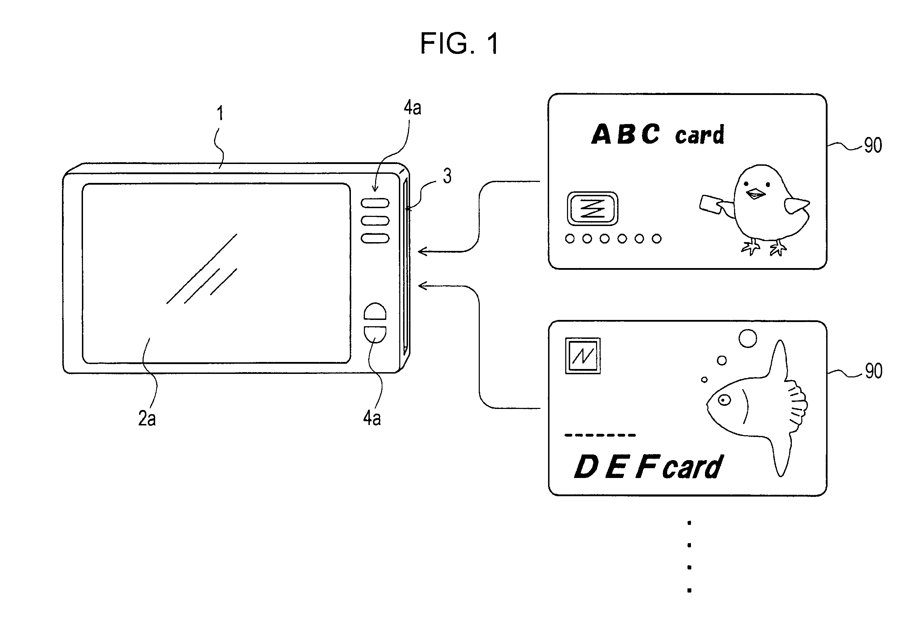

A mobile card reader 1 according to an embodiment is a device capable of holding a non-contact IC card 90 therein. Various aspects are supposed as shapes and appearances of the mobile card reader 1. Fig. 1 illustrates a schematic example.

The mobile card reader 1 is a compact and light-weight apparatus suitable for mobile use. As illustrated, the mobile card reader 1 has a display panel 2a formed on its front surface. The display panel 2a is formed of, for example, a liquid crystal display panel or an organic electroluminescence (EL) display panel.

And, a holding unit 3 capable of holding one or more non-contact IC cards 90 is formed in the casing of the mobile card reader 1. A user can freely take out and put the non-contact IC card 90 which the user possesses from and in the holding unit 3. The holding unit 3 may be formed so as to hold one non-contact IC card 90 or may be formed so as to hold multiple non-contact IC cards 90.
For example, non-contact IC cards for various applications including electric money, transportation, personal identification, etc. and non-contact IC cards for combinations of these various applications exist as the non-contact IC card 90. And, heavily used non-contact IC cards 90 exist depending on issuers. For example, many types of non-contact IC cards 90 provided by different companies and organizations also exist as the non-contact IC card 90 for electronic money. Accordingly, general users often possess the non-contact IC cards 90 of multiple kinds. The users possessing the multiple non-contact IC cards 90 may collectively store them in the mobile card reader 1.

And, the mobile card reader 1 is provided with operators used for user's operations, such as operation keys 4a.
Incidentally, in addition to the operation keys 4a or without providing the operation keys 4a, a touch panel mechanism may be provided on the display unit 2a and various operations may be performed in response to touch operations in association with the screen display. And, a dial operator, a touch pad operator, etc. may be provided.

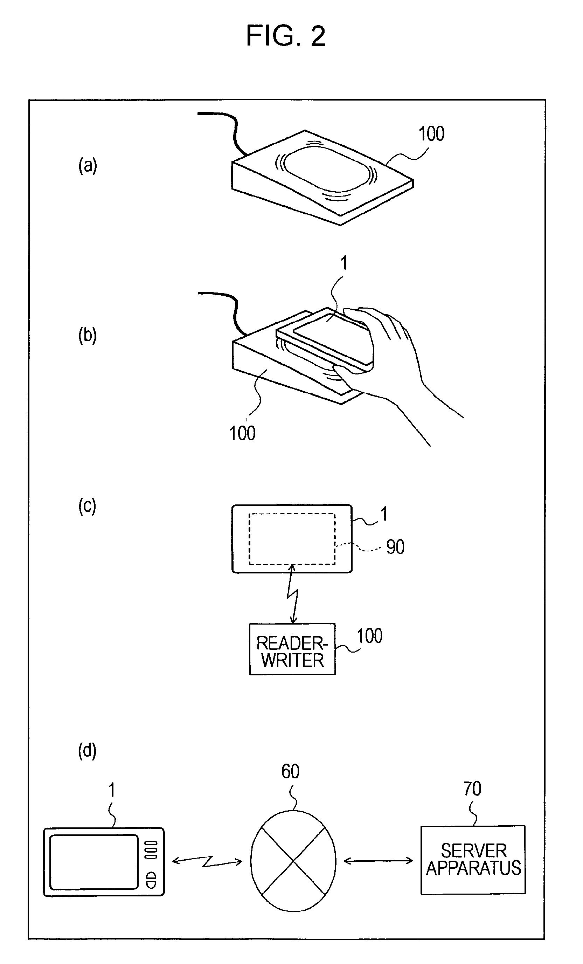

The mobile card reader 1 described above is used in manners shown in Fig. 2 in a state in which the non-contact IC card 90 is held in the mobile card reader 1.
Fig. 2(a) illustrates a reader-writer apparatus 100 provided in, for example, a shop. The user of the mobile card reader 1 carries the mobile card reader 1 in a state in which the non-contact IC card 90 is held in the holding unit 3 in the mobile card reader 1. For example, when the user purchases an article in a shop, the user directly makes the mobile card reader 1 close to the reader-writer apparatus 100 or directly places the mobile card reader 1 over the reader-writer apparatus 100, as in an example in Fig. 2(b). At this time, as in an example in Fig. 2(c), communication is established between the reader-writer apparatus 100 and the non-contact IC card 90 to perform a payment process concerning the purchase of the article.
In other words, the non-contact IC card 90 held in the mobile card reader 1 directly communicates with the reader-writer apparatus 100. The mobile card reader 1 does not especially perform the communication in this case and only functions as a card holder.
Specifically, although the non-contact IC card 90 is usually used with being directly placed over the reader-writer apparatus 100, the non-contact IC card 90 can be used in the same manner even with being held in the mobile card reader 1.

As described below, the mobile card reader 1 functions as a device that presents useful information to the user on the basis of the type of the non-contact IC card 90 that is held and/or position information that is sequentially detected.
And, as shown in Fig. 2(d), the mobile card reader 1 has a function of communicating with a server apparatus 70 over a network 60. The mobile card reader 1 is also capable of displaying information supplied from the server apparatus 70 in the display panel 2a.
Various networks including the Internet, a mobile phone communication network, a personal handyphone system (PHS) communication network, an ad hoc network, and a local area network (LAN) can be considered as the network 60.

### [2. Configurations of mobile card reader, non-contact IC card, and server apparatus]

A configuration example of the mobile card reader 1 will now be described with reference to Fig. 2. Fig. 2 also illustrates the configuration of the non-contact IC card 90 held in the holding unit 3 of the mobile card reader 1.

A system controller 10 is composed of a microcomputer including, for example, a central processing unit (CPU), a read only memory (ROM), a random access memory (RAM), a non-volatile memory unit, and an interface unit and serves as a control unit controlling the entire mobile card reader 1. The system controller 10 performs a variety of arithmetic processing and exchanges control signals, etc. with each component based on programs held in the ROM, etc. to cause the component to perform a required operation. And, for example, a device ID or the like assigned to each mobile card reader 1 is stored in the non-volatile memory unit.

A display unit 2 includes the display panel section 2a, which is a liquid crystal panel or the like described above, and a display driver displaying and driving the display panel section 2a.
The display driver includes a pixel driving circuit for displaying image data supplied from the system controller 10 in the display panel section 2a, which is a liquid crystal panel or the like. The pixel driving circuit applies a driving signal based on a video signal to each pixel arranged in a matrix pattern in the display panel section 2a at predetermined horizontal and vertical driving timing to perform the display.

A network communication unit 16 transmits and receives data to and from an external device. The network communication unit 16 may be configured so as to perform the network communication, as shown in Fig. 2(d), through short-range radio communication with, for example, network access points by a method such as a wireless LAN or Bluetooth or may directly perform wireless communication with the external device having the corresponding communication function.
The server apparatus 70 described below is supposed as the external device that performs the communication.

A position detecting unit 12 is, for example, a global positioning system (GPS) receiving unit. The GPS receiving unit receives an electromagnetic wave from a GPS satellite and supplies information about the latitude and longitude of the current position to the system controller 10.
Incidentally, a position information service provided by Wireless Fidelity (WiFi) or a mobile phone company may be used as the position detecting unit 12 or a combination of such a service and the GPS may be used as the position detecting unit 12.
A date-and-time counter unit 13 constantly counts a year, month, date, hour, minute, and second and supplies the current date-and-time information (year, month, date, hour, minute, and second) to the system controller 10.

An operation unit 4 is configured so as to include, for example, the operation keys 4a shown in Fig. 1 or operators including a dial and so as to detect a user's operation as a key operation or the like.
And, a touch pad or a touch panel may be provided as an operator. For example, the touch panel is provided in the display unit 2 and an operation input is performed with a touch operation by the user on the display screen.
And, the touch panel, a cross key, a job dial, etc. may be provided as an operator used for moving a pointer, such as a cursor, on the screen.
Alternatively, the operation unit 4 may include, for example, an acceleration sensor, an angular velocity sensor, a vibration sensor, and/or a pressure sensor. The operation unit 4 may recognize, for example, an action of the user who vertically and horizontally shakes the mobile card reader 1 itself as an operation to allow, for example, a moving operation of the cursor or the like on the screen to be executed. And, the operation unit 4 may recognize a behavior of the user who taps the casing of the mobile card reader 1 or a behavior of the user who presses his/her finger or the like on the part corresponding to the pressure sensor as a certain operation.
Information about the operation with the operation unit 4 is supplied to the system controller 10. The system controller 10 performs a required control process in accordance with the operation information.

A storage unit 11 is used to store a variety of data.
This storage unit 11 may be a solid-state memory, such as a RAM or a flash memory, or may be, for example, a hard disk drive (HDD).
And, the storage unit 11 may be a recording-playback drive supporting a portable recording medium, for example, supporting a recording medium, such as a memory card, an optical disk, a magneto-optical disk, or a hologram memory, including the solid-state memory, instead of the built-in recording medium.
Obviously, both of the built-in type memory, such as the solid-state memory or the HDD, and the recording-playback drive supporting the portable recording medium may be included in the storage unit 11.
The storage unit 11 records and stores the variety of data under the control of the system controller 10. And, the storage unit 11 reads out the recorded data under the control of the storage unit 11 and supplies the readout data to the system controller 10.

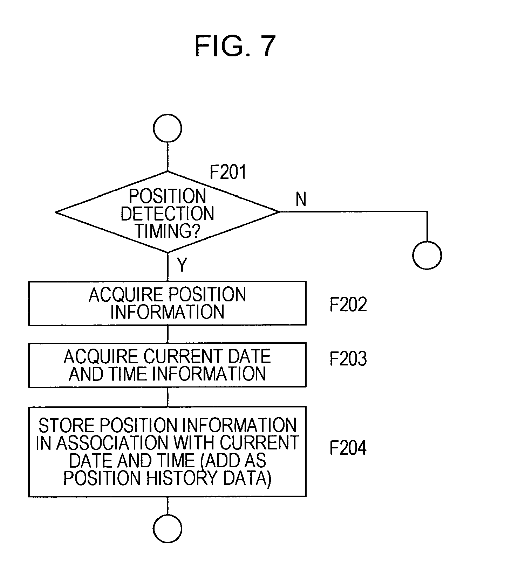

The storage unit 11 stores type information about the non-contact IC card 90, for example, held in the holding unit 3. Incidentally, the type information may be stored in an internal memory of the system controller 10.
And, the storage unit 11 stores a map database in which map drawing data and a place name, a name, etc. corresponding to each piece of position information are registered. Incidentally, the map database may not be stored, and information necessary for processing may be received from a map database in the server apparatus 70, etc. through the communication with the server apparatus 70, etc. by the network communication unit 16, if needed, to be temporarily stored.
And, the storage unit 11 stores position history data. The position history data results from accumulating data in which the position information (for example, latitude and longitude) detected by the position detecting unit 12 is associated with the corresponding date and time information. As described below with reference to Fig. 7, the system controller 10 constantly performs an additional storage process of the position history data.

And, the storage unit 11 may be used for buffering of data about communication with the server apparatus 70 by the network communication unit 16.
And, the storage unit 11 may be used for buffering of data that is read out by an IC-card communication unit 15 described below through communication with the non-contact IC card 90.

And, the storage unit 11 stores image data corresponding to the various non-contact IC cards 90. For example, the storage unit 11 stores image data similar to a pattern drawn on the surface of the non-contact IC card 90 as corresponding image data about the non-contact IC card 90 of each type. Obviously, although the corresponding image data is not restricted to the image data similar to the pattern on the surface of the card, the corresponding image data is preferably an image from which the user can recognize the type of the card. Incidentally, the corresponding image data may be stored in the internal memory of the system controller 10.
As the corresponding image data, it is sufficient to store images corresponding to the non-contact IC cards 90 within a type range of the non-contact IC cards 90, which the mobile card reader 1 can support, in the storage unit 11 or the like in advance. However, the corresponding image data may be received and acquired from the server apparatus 70, etc. through, for example, communication with the server apparatus 70, etc. by the network communication unit 16, if needed, and the acquired corresponding image data may be stored, instead of being stored in the storage unit 11 or the internal memory of the storage unit 11 in advance.

The IC-card communication unit 15 is capable of communicating with the non-contact IC card 90 held in the holding unit 3 to read out information from the non-contact IC card 90.
In general, a TypeA method, a TypeB method, and a near field communication (NFC) method are known as the communication methods for the non-contact IC card 90.
The TypeA method adopts a communication speed of 106 kbps, amplitude-shift keying (ASK) 100% as the modulation method, and Miller and Manchester encoding methods as the encoding methods.
The TypeB method adopts a communication speed of 106 kbps, the ASK 10% as the modulation method, and Non-return-to-zero (NRZ) method as the encoding method.
The NFC method adopts a communication speed of 212 kbps, the ASK 10% as the modulation method, and the Manchester encoding method as the encoding method.
It is sufficient for the IC-card communication unit 15 to include a communication processing circuit system (encoder-decoder) corresponding to a given communication method and an antenna unit. The IC-card communication unit 15 may be provided with three communication processing circuit systems corresponding to, for example, the above respective three communication methods or may be provided with one or two communication processing circuit systems.
The provision of the three communication processing circuit systems allows almost all the common non-contact IC cards 90 to be supported. And, the provision of only one communication processing circuit system, such as the NFC method, allows the non-contact IC cards 90 of multiple kinds adopting the communication method to be supported.

The holding unit 3 includes a card-insertion detector 14. The card-insertion detector 14 detects insertion of the non-contact IC card 90 and notifies the non-contact IC card 90 of the insertion. The card-insertion detector 14 may be formed of a mechanical switch mechanism or an optical detection mechanism using a photocoupler or the like.
Incidentally, when the holding unit 3 is capable of holding the multiple non-contact IC cards 90, the card-insertion detector 14 is configured so as to enable the detection of insertion or removal of the respective non-contact IC cards 90.

The non-contact IC card 90 to be held in the holding unit 3 includes an IC chip including a control section 91, a storage section 92, and a non-contact communication section 93 and an antenna coil (not shown), as illustrated.
The control section 91 is composed of, for example, a CPU. The control section 91 controls readout from and writing in the storage section 92 and a communication operation by the non-contact communication section 93.
The storage section 92 includes a ROM, a RAM, an electrically erasable programmable read only memory (EEPROM), and so on and stores a variety of information.
The non-contact communication section 93 performs non-contact wireless communication with the external reader-writer apparatus 100 supporting the IC card and the IC-card communication unit 15 in the mobile card reader 1.
This non-contact IC card 90 is made close to the reader-writer apparatus 100 to perform communication with the reader-writer apparatus by electromagnetic waves, as already common. The side of the non-contact IC card 90 receives an electromagnetic field generated by coil energization at the side of the reader-writer apparatus to generate an operating voltage from a voltage induced by the antenna coil in order to communicate with the reader-writer apparatus. The communication with the IC-card communication unit 15 is performed in the same manner.

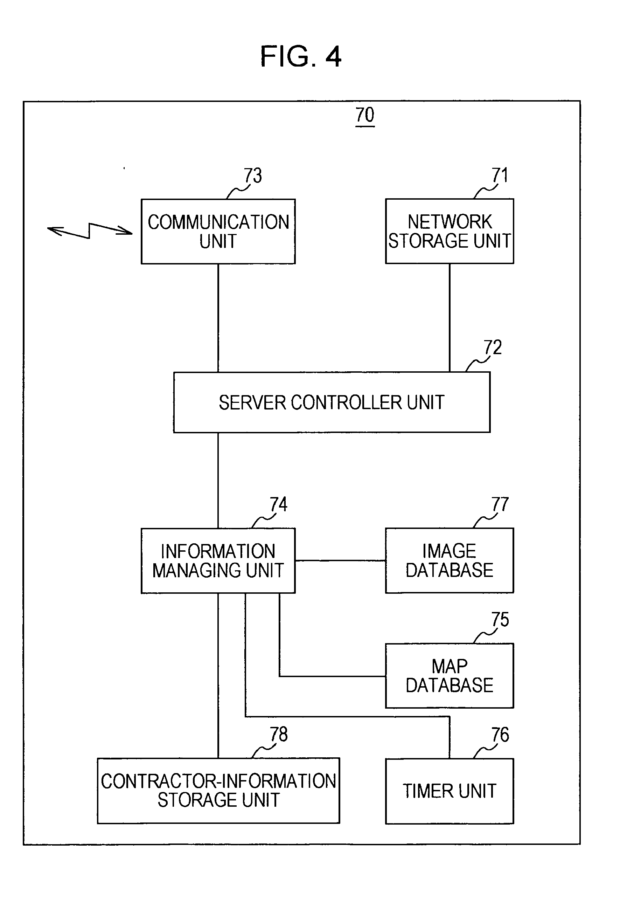

The configuration of the server apparatus 70 will now be described with reference to Fig. 4.
As described above with reference to Fig. 2(d), the server apparatus 70 is an apparatus capable of transmitting provided data to the mobile card reader 1 through the communication over, for example, the network 60. For example, image data indicating article advertisement and promotion of various shops and image data indicating a coupon that can be used in purchase can be considered as the provided data.
The server apparatus 70 includes a server controller unit 72, a network storage unit 71, a communication unit 73, an information managing unit 74, a map database 75, a timer unit 76, an image database 77, and a contractor-information storage unit 78.

The network storage unit 71 is realized by, for example, an HDD. For example, the network storage unit 71 is used for buffering or storage of transmission and reception data in communication with the mobile card reader 1 or another network terminal device, is used as an extended working area for the server controller unit 72, or is used for storage of a variety of data.
The communication unit 73 performs data communication with the network communication unit 16 in the mobile card reader 1 or a communication unit in another network terminal device over the network 60.
The server controller unit 72 performs operation control required as the server apparatus 70. Particularly, the server controller unit 72 performs a control operation for transmission of the provided data to the mobile card reader 1.

The information managing unit 74, the map database 75, the timer unit 76, the image database 77, and the contractor-information storage unit 78 are parts that perform operations for selecting the provided data to be transmitted to the mobile card reader 1.
The map database 75 stores map information.
The timer unit 76 counts the current date and time (year, month, date, hour, minute, and second).
The image database 76 stores a variety of provided data used as, for example, advertisement image data and coupon image data.
The contractor-information storage unit 78 has registered information about a contractor who has contracted with the manager of the server apparatus 70. The contractor is, for example, a supplier providing advertisement or coupons. And, for example, position information about each shop of the contracted supplier (for example, the position of a shop dealing with the advertised article or the position of a shop where the coupon can be used) and the types of the non-contact IC cards 90 that can be used in the shop are registered as the contractor information. Obviously, the name of each contractor, identification information about each contractor, the period of the contract, information specified in the provided data provided by the contractor, and so on are also registered in the contractor-information storage unit 78.
And, attribute information about general users to which each contractor intends to provide the advertisement and coupons may be registered in the contractor-information storage unit 78. For example, the attribute information includes the age, gender, hobby, and preference of each user.

The information managing unit 74 searches the image database 77 for the provided data to be transmitted to the mobile card reader 1 in accordance with the position of the shop, which is the contractor information, the types of the available non-contact IC cards 90, the current date and time, the current position of the mobile card reader 1, and so on.
The server controller unit 72 causes the communication unit 73 to transmit the provided data extracted from the image database 77 by the information managing unit 74 to the mobile card reader 1.
A communication operation between the mobile card reader 1 and the server apparatus 70 for this operation will be described below.

The configurations of the mobile card reader 1 and the server apparatus 70 described above are only examples. Obviously, various components may be add to or removed from the mobile card reader 1 and the server apparatus 70 depending on operation examples and functions that are actually performed.

### [3. Determination of type of non-contact IC card and display operation of type corresponding image]

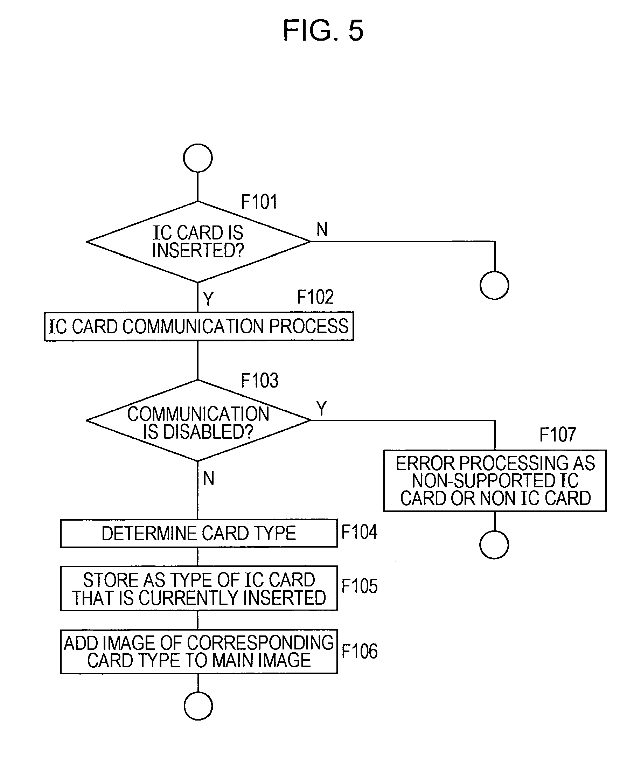

A process performed by the system controller 10 in the mobile card reader 1 when the non-contact IC card 90 is inserted in the holding unit 3 will now be described with reference to Fig. 5.
When the user inserts the non-contact IC card 90 in the holding unit 3 of the mobile card reader 1, information indicating that the insertion of the card is detected is transmitted from the card-insertion detector 14 to the system controller 10.

Upon detection of the insertion of the non-contact IC card 90, the system controller 10 advances the process from Step F101 in Fig. 5 to Step F102 to perform a communication process with the inserted non-contact IC card 90. Specifically, the system controller 10 causes the IC-card communication unit 15 to perform the communication operation to read out data from the non-contact IC card 90. Particularly in this case, readout of information necessary for identifying the type of the non-contact IC card 90 is performed. For example, type identification information about the non-contact IC card 90 itself is read out.

Incidentally, the system controller 10 does not know which communication method is adopted by the non-contact IC card 90 that is loaded by the user. Accordingly, if the IC-card communication unit 15 is provided with the respective encoders-decoders for the TypeA method, the TypeB method, and the NFC method, the system controller 10 sequentially attempts communication by each communication method. Establishment of communication by a certain communication method determines the communication method adopted by the inserted non-contact IC card 90. In this case, the communication method should be executed to read out information necessary for the type determination from the non-contact IC card 90.
Obviously, if the IC-card communication unit 15 supports only one communication method, for example, the NFC method, the communication with the inserted non-contact IC card 90 is attempted by the supported communication method.

If the communication is disabled as the result of the execution of the communication with the loaded non-contact IC card 90 by the IC-card communication unit 15, the system controller 10 advances the process from Step F103 to Step F107 to perform error processing. For example, if the user inserts the non-contact IC card 90 adopting a communication method that is not supported by the mobile card reader 1 or a card other than the non-contact IC card 90, the error processing is performed because of the disablement of the communication.
As the error processing, the system controller 10 may display a message presenting that the inserted card is not the supported non-contact IC card 90 in, for example, the display unit 2 to draw the user's caution. And, the system controller 10 processes the inserted card as not being inserted. Specifically, the system controller 10 performs no processing since then.

If the communication with the inserted non-contact IC card 90 is established, the process proceeds from Step F103 to Step F104 to determine the type of the card. Specifically, the system controller 10 determines the type of the inserted non-contact IC card 90 based on information read out from the inserted non-contact IC card 90 through the communication by the IC-card communication unit 15.
For example, the types of the non-contact IC cards 90 that have names "Edy", "Suica", ... and that are currently commonly used are determined. In Step F105, an identification code, name information, etc. corresponding to the determined card type are stored in the storage unit 11 or in the internal memory of the system controller 10 as the type information about the non-contact IC card 90 currently held in the holding unit 3.
It is made possible for the system controller 10 to determine the type of the non-contact IC card 90 that is currently held in the above manner.
And, after the type information is stored, in Step F106, an image (type-corresponding image data) corresponding to the card type is read out and acquired from, for example, the storage unit 11 and the acquired type-corresponding image data is added and displayed as main image display data. Incidentally, the type-corresponding image data corresponding to the card type may be acquired from the server apparatus 70, etc. through, for example, the communication with the external server apparatus 70 by the network communication unit 16.

The system controller 10 performs the process in Fig. 5 each time the insertion of a card is detected. For example, if the multiple non-contact IC cards 90 can be held in the holding unit 3, the process in Fig. 5 is performed each time each card is inserted.
Accordingly, the system controller 10 can constantly determine the type of one or more non-contact IC cards 90 that are currently held.

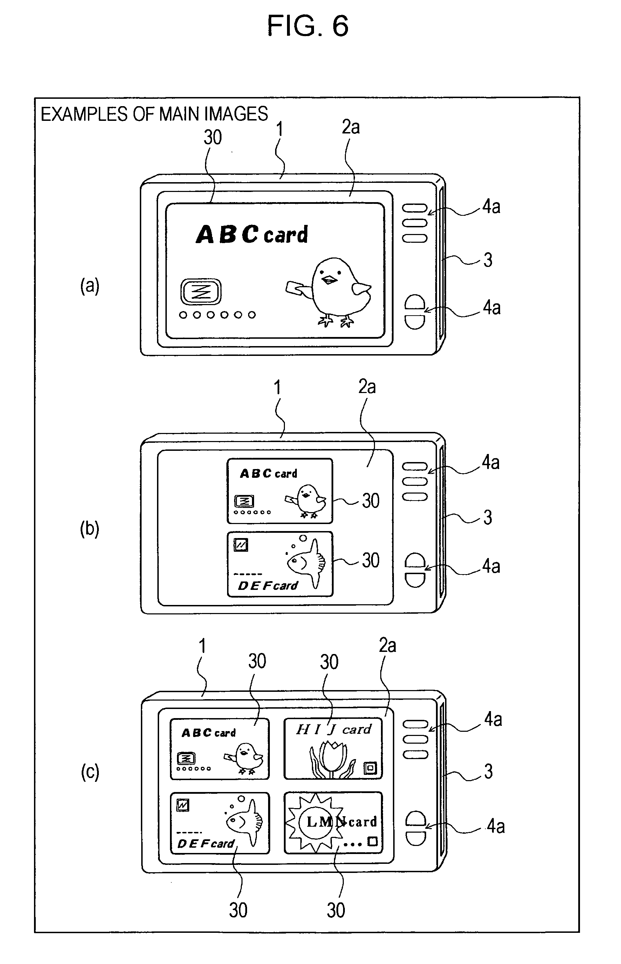

Examples of displayed main images are shown in Fig. 6. The main images here are images which the system controller 10 causes the display unit 2 to display in a normal state in which the users especially perform no operation.
Fig. 6(a) shows a case in which one non-contact IC card 90 is held in the non-contact IC card 90. For example, it is assumed that the "ABC" card shown in Fig. 1 is held. After the system controller 10 recognizes the "ABC" card as the card type, the system controller 10 adds the type-corresponding image data corresponding to the "ABC" card to the main image in the above Step F106. When the type-corresponding image data is, for example, substantially the same image as the one printed on the card surface of the "ABC" card, an image 30 substantially the same as the image on the card surface of the "ABC" card is displayed in the display panel 2a, as shown in Fig. 6(a).
Fig. 6(b) shows a case in which the two non-contact IC cards 90 are held. It is assumed that the "ABC" card and the "DEF" card shown in Fig. 1 are held. In this case, the type-corresponding image data for the respective cards is added to the main image to display the images 30 substantially the same as the images on the card surfaces of the respective cards, as illustrated.
Fig. 6(c) shows a case in which the four non-contact IC cards 90 are held. Also in this case, the type-corresponding image data for the respective cards is added to the main image to display the images 30 substantially the same as the images on the card surfaces of the respective cards, as illustrated.

As described above, displaying the image 30 corresponding to the type of each non-contact IC card 90 that is held in the display panel 2a allows the user of the mobile card reader 1 to recognize the type of the held non-contact IC card 90 without taking the trouble to take out each non-contact IC card 90 from the holding unit 3 and confirm the type of the non-contact IC card 90.
Accordingly, for example, it is convenient for the case in which the non-contact IC card 90 is used with being held in the mobile card reader 1, as in the example in Fig. 2(b).
Incidentally, the type-corresponding image data may not be necessarily substantially the same as the image on the card surface. For example, even if the type-corresponding image data is a character image indicating the card name, a logo image for every card type, an image indicating an advertising character, or the like, the user can determine the type of each card that is held from the main display.
Furthermore, the type-corresponding image data may be an arbitrary image that is generally supposed not to specify the card type necessarily. Image data about an image that is arbitrarily selected or created for each card type by the user may be used as the type-corresponding image data.
And, menu items may be displayed together on the main image. For example, it can be considered that operation menus or the likes for usage history display, map display, etc. described below, are displayed.

Incidentally, when the holding unit 3 is configured so as to hold only one non-contact IC card 90, the transmittivity of the display panel 2a is controlled to normally make the display panel 2a transparent or translucent in order to allow visual recognition of the card surface of the held non-contact IC card 90. Obviously, also when only one non-contact IC card 90 can be held, the main image including the type-corresponding image data may be displayed, as in the case in Fig. 6(a).

### [4. Position history storage process]

The mobile card reader 1 in this example constantly performs a position history storage process. Fig. 7 shows the position history storage process performed by the system controller 10.
The system controller 10 periodically performs the process in Fig. 7 at certain timing, for example, for every few seconds or for every few minutes, which is position detection timing.

At the position detection timing, the system controller 10 proceeds from Step F201 to Step F202 to acquire the current position information. Specifically, the system controller 10 acquires the position information (latitude and longitude) detected by the position detecting unit 12.
And, in Step F203, the system controller 10 acquires the current date and time information (year, month, date, hour, minute, and second) from the date-and-time counter unit 13.
Then, in Step F204, the system controller 10 stores the current position information in association with the current date and time information as the position history data. For example, the storage unit 11 includes an area in which the position history data is stored, and these position information and date and time information are added as the position history data to be stored in the area.

For example, periodically performing the process in Fig. 7 causes the position information in association with the action of the user carrying the mobile card reader 1 to be stored along with the date and time information as the position history data.
The storage of such position history data allows the system controller 10 to determine the position of the mobile card reader 1 at a specified past date and time (the position where the user carrying the mobile card reader 1 existed).

Incidentally, the addition and registration process of the position history data in Fig. 7 may be performed, for example, if a shift in position occurs, in addition to periodic performance. For example, the system controller 10 monitors the position information detected by the position detecting unit 12 and, if a variation in the position information occurs, the system controller 10 may perform a process to add the varied position information and the date and time information at that time as the position history data.

### [5. Usage history display operation]

The mobile card reader 1 can display a usage history of the non-contact IC card 90 held therein. For example, the mobile card reader 1 displays the usage history in response to a user's operation to require the display of the usage history.
As the user's operation in this case, the user may use an operator such as the operation key 3a or may instruct the display of the usage history with a touch operation if the display panel 2a has a touch panel function.
And, if the multiple non-contact IC cards 90 are held, an operation method can be considered in which the image of the non-contact IC card 90 whose history is to be displayed is touched, for example, on the corresponding main image shown in Fig. 6 in order to select a card whose usage history is to be displayed.

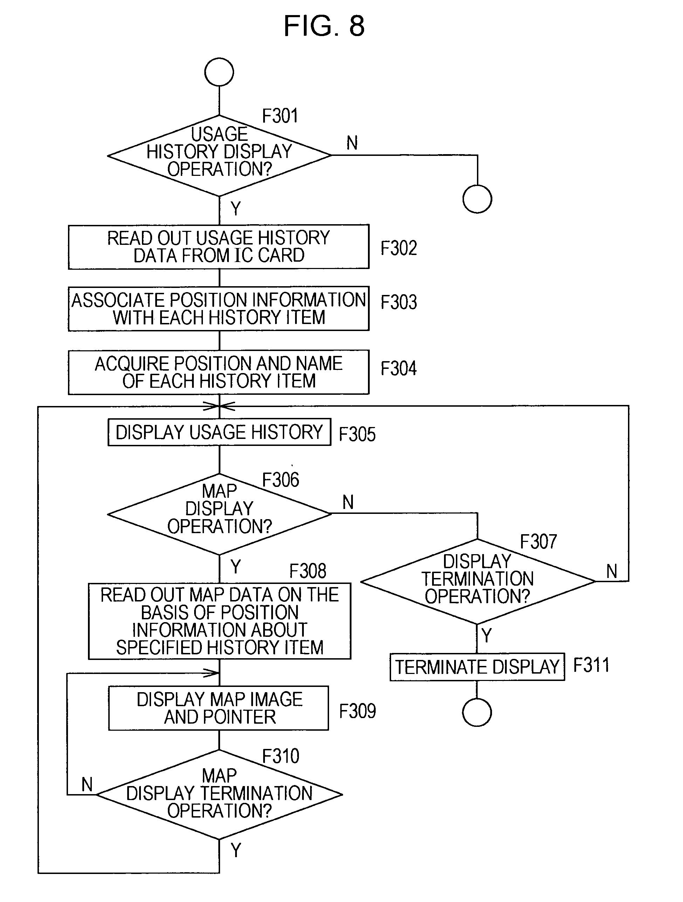

If the display of the usage history is required with a user's operation, the system controller 10 advances a process in Fig. 8 from Step F301 to Step F302. In Step F302, the system controller 10 causes the IC-card communication unit 15 to perform the communication with the non-contact IC card 90 and to read out usage history information from the non-contact IC card 90. Incidentally, if the multiple non-contact IC cards 90 are held, the non-contact IC card 90 whose usage history to be displayed is selected with a user's operation. In this case, the system controller 10 obviously causes the IC-card communication unit 15 to perform the communication with the selected non-contact IC card 90.

After the usage history information is read out from the non-contact IC card 90, in Step F303, the position information is associated with each usage history item.
Normally, the date and time of transaction, the charged amount of money, the payment amount of money, the balance, etc. are stored as the item of each usage in the usage history information stored in the non-contact IC card 90 for electronic money but the use position is not stored therein.
Accordingly, in Step F303, the position information indicating the use position is added to each item in the usage history.
As described above with reference to Fig. 7, since the system controller 10 adds and stores the position history data, for example, periodically, the position history data up to the current date and time is accumulated in the storage unit 11.
Accordingly, the date and time of transaction in the usage history information read out from the non-contact IC card 90 can be checked against the date and time information included in the position history data to determine the position information indicating the transaction position of each transaction item in the usage history information.
For example, in Step F303, the usage history information is checked against the position history data in the above manner to determine the position information (latitude and longitude) corresponding to each item in the usage history.

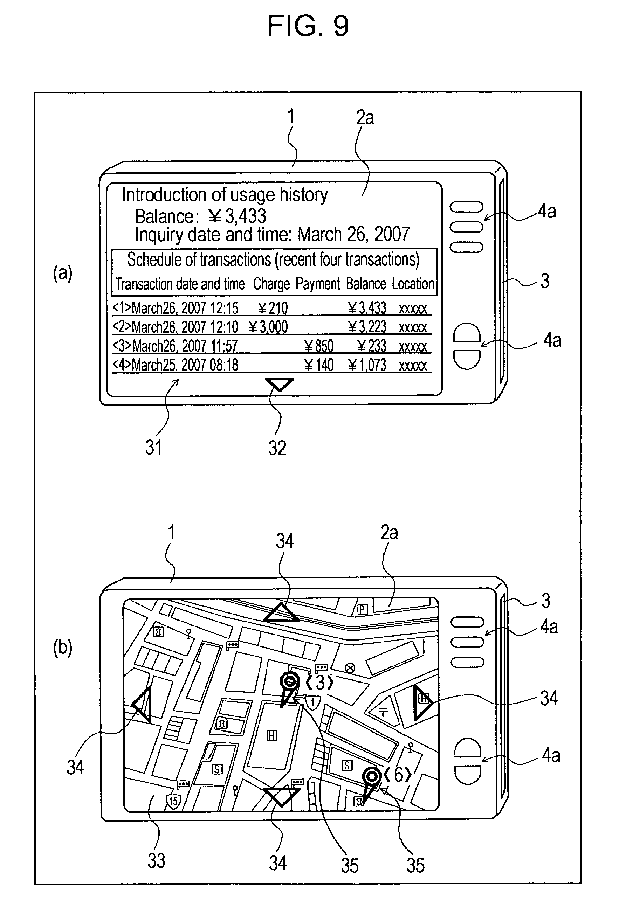

Then in Step F304, the system controller 10 determines the address, the name, etc. of the position from the position information (latitude and longitude) associated with each item in the usage history.
Specifically, the map database stored in the storage unit 11 is searched by using the position information to acquire the address and the name, for example, the name of a shop, corresponding to the latitude and longitude as the position information.
After the above processing is performed, in Step F305, the system controller 10 causes the display unit 2 to display the usage history information. A display example is shown in Fig. 9(a).

As in the example in Fig. 9(a), the respective items in the usage history of the non-contact IC card 90 are listed as a usage history image 31. And, information indicating a position, such as the name of a shop, is added to each item as the position where the non-contact IC card 90 is used.
Displaying such a usage history allows the user to also confirm the use positions of the non-contact IC card 90, in addition to the dates and times, the amounts of money, etc. of transactions using the non-contact IC card 90.
In addition, for example, a forward button 32 is displayed on the screen to allow the user who selects the forward button 32 to perform scrolling display or paging display of the items in the usage history. Obviously, the operation key 4a may be used to perform the scrolling display or the like.

In this example, map display concerning the usage history is also made available.
For example, when the items of the usage history shown in Fig. 9(a) are displayed, the user can perform a certain operation, such as a touch operation or a cursor operation/enter operation, to select an item in the usage history in order to require the map display.

After the usage history is displayed in Step F305, in Step F306, the system controller 10 monitors a map display operation. Then, in Step F307, the system controller 10 monitors an operation for terminating the display of the usage history.
If the user's operation to require the map display is detected, the system controller 10 advances the process from Step F306 to Step F308. In Step F308, the position information associated with an item specified by the user, among the items in the used history, is used to read out the map data (map drawing data) for display from the map database in the storage unit 11. For example, the map data with which the map is to be drawn within a range substantially around the position information (latitude and longitude) indicating the use position is read out.
Then, in Step F309, the map image and pointers indicating the use positions are displayed. Fig. 9(b) shows a display example.
For example, a map image 33 is displayed as illustrated and a pointer 35 is used on the map image to indicate the use position. For example, if the user selects an item <3> in the usage history in Fig. 9(a) to require the map display, it is preferred that the pointer 35 corresponding to the item <3> be displayed at a substantial center of the map, as in the example in Fig. 9(b).
Displaying the use position in the map display in the above manner allows the user to more accurately confirm the use position of the non-contact IC card 90.

Incidentally, in the example in Fig. 9(b), the pointer 35 corresponding to an item <6> is also displayed in the map. For example, if another history item exists at a position near the position information about the selected item <3> (a position included in the map image 33 that is being displayed), such an item that is not selected may also be displayed with the pointer.
And, forward buttons 34 and the likes are displayed on the screen where the map is displayed and the user selects any of the forward buttons 34 to allow the scrolling display of the map image or the display of moving to an adjacent block on the map. Obviously, the operation keys 4a may be used to perform the scrolling display or the like. And, it is also better to make a change in scale of the map operable.
Furthermore, if the position of another item that is not selected can be displayed with the pointer 35 in response to a change in the display range of the map due to the scrolling, the change in scale, or the like, it is preferred to display the pointer 35 at the position.
And, if the user performs an operation to select the pointer 35 in the map display and detailed information at the position (of a shop, etc.) is acquired from, for example, the map database or an uniform resource locator (URL) etc. corresponding to the position information is added to the map database or the like, it may be possible to access a Web site where the shop is introduced through the communication by the network communication unit 16 to perform browsing.

If the user performs an operation to terminate the map display, the system controller 10 returns the process from Step F310 to Step F305 to return the display content in the display unit 2 to the display of the usage history information as in Fig. 9(a).
And, if the user performs the display termination operation while the usage history is displayed in Step F305, the system controller 10 advances the process from Step F307 to Step F311 to perform a process to terminate the display of the usage history. For example, the system controller 10 performs a process to terminate the display in Fig. 9(a) and return the display to the main screen, as shown in Fig. 5.

Performing the above processing by the system controller 10 causes the usage history of the non-contact IC card 90 that is held to be displayed along with the use position and allows the user to confirm the use position. And, it is also possible for the user to confirm the use position on the map. Consequently, the user can very easily confirm the usage history of the non-contact IC card 90.
Incidentally, it may be possible to heavily use the methods of processing the usage history and the map display. For example, if the user specifies a place name, a region, etc. to perform the map display and, at that time, the use position exists in the displayed map range, it may be possible to perform a process to display the pointers, as shown in Fig. 9(b).
And, although the map database is stored in the storage unit 11 in the mobile card reader 1 in this example, it may be possible to perform a method of using the map database 75 at the side of the server apparatus 70. Specifically, the system controller 10 causes the network communication unit 16 to transmit the position information about the item that is selected in the history to the server apparatus 70 to require the map data.
At the side of the server apparatus 70, data used for drawing the map around the position information is extracted from the map database 75 in response to the request for the map data and the extracted data is transmitted to the mobile card reader 1. This enables the display, as in the example in Fig. 9(b), even if the mobile card reader 1 side is not provided with the map database.

### [6. Provided data display operation]

The mobile card reader 1 performs an operation to acquire information (provided data) useful for the user from the server apparatus 70 depending on the type of the non-contact IC card 90 that is held and to present the acquired information to the user. A display operation of the provided data will now be described.

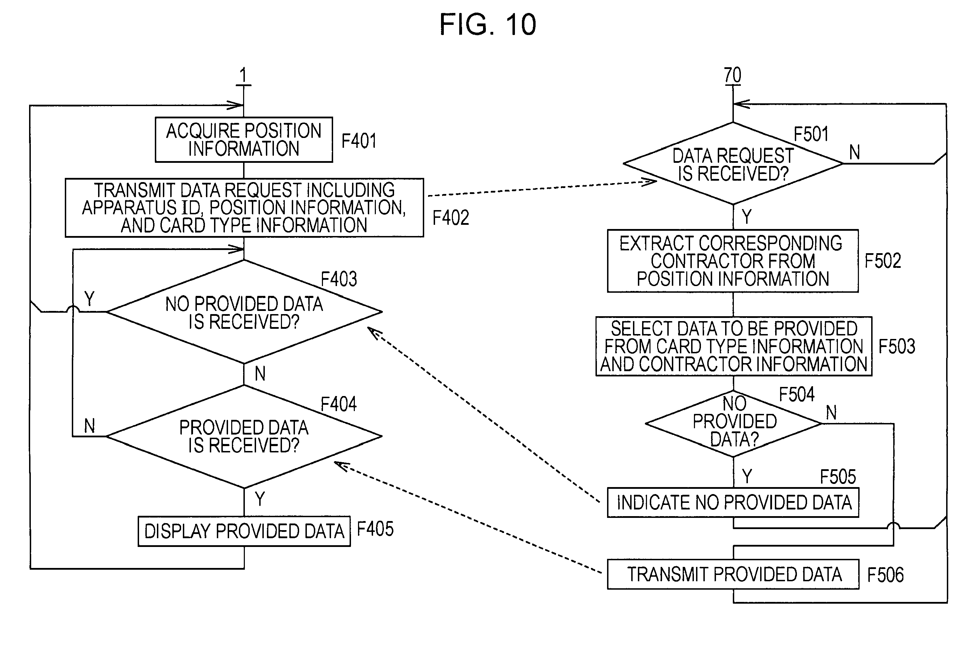

As processes to display the provided data, Fig. 10 shows a process performed by the system controller 10 in the mobile card reader 1 and a process performed by the server apparatus 70.
The system controller 10 in the mobile card reader 1 performs the process including Step F401 and the subsequent steps, for example, periodically. Incidentally, the process may not be periodically performed. For example, the process may be performed if the user performs an operation to require the provided data or may be performed if a shift in position is recognized when the current position information is constantly monitored.

In Step F401, the system controller 10 acquires the current position information (latitude and longitude) from the position detecting unit 12.
Then, in Step F402, the system controller 10 causes the network communication unit 16 to transmit a data request to the server apparatus 70. The data request should include the apparatus ID, which is the individual identification information about the mobile card reader 1, the current position information acquired in Step F401, and the card type information about the non-contact IC card 90 that is currently held. The card type information is identification information that is determined when the non-contact IC card 90 is loaded in Fig. 5 described above. If the multiple non-contact IC cards 90 are held, the card type information about the respective non-contact IC cards 90 should be included.
After the data request is transmitted in the above manner, in Steps F403 and F404, the system controller 10 waits for reception from the server apparatus 70.

After the communication unit 73 confirms reception of the data request from the mobile card reader 1, the server controller unit 72 in the server apparatus 70 advances the process from Step F501 to Step F502 to instruct the information managing unit 74 to perform selection of the provided data to be transmitted to the mobile card reader 1. Specifically, the server controller unit 72 notifies the information managing unit 74 of the position information included in the data request from the mobile card reader 1 and the type information about the non-contact IC card 90 to perform Steps F502 and F503.
In Step F502, the information managing unit 74 refers to the contractor information in the contractor-information storage unit 78 based on the position information included in the data request from the mobile card reader 1. Then, the information managing unit 74 extracts a contractor a shop or the like of which exists near the position information included in the data request from the mobile card reader 1.
Then, in Step F503, the information managing unit 74 selects the provided data to be transmitted to the mobile card reader 1 based on the card type information included in the data request from the mobile card reader 1 and the contractor information.
For example, the card type(s) in the contractor information about the contractor extracted in the above Step F502 is confirmed. In other words, the card type(s) that can be used in the shop, etc. of the contractor is confirmed. Then, a contractor who can use the non-contact IC card 90 of the type indicated by the card type information transmitted from the mobile card reader 1 for payment, etc. is extracted.
With the above steps, the contractor who can use the non-contact IC card 90 held in the mobile card reader 1 is extracted near the position of the current mobile card reader 1. The information managing unit 74 selects the image data indicating the advertisement or coupon provided by the extracted contractor from the image database as the current provided data.

The server controller unit 72 performs transmission control in response to the above processing by the information managing unit 74.
First, if a processing result indicating that no provided data exists is notified from the information managing unit 74, the server controller unit 72 proceeds from Step F504 to Step F505 to cause the communication unit 73 to transmit notification of no provided data to the mobile card reader 1.
For example, it is determined that no provided data exists if the shop or the like of the contractor does not exist near the position of the current mobile card reader 1 or if the shop or the like of the contractor exists near the position of the current mobile card reader 1 but the non-contact IC card 90 that is currently held in the mobile card reader 1 cannot be used in the shop and the like, and the notification of no provided data is transmitted to the mobile card reader 1.
If the system controller 10 in the mobile card reader 1 receives the notification of no provided data from the server apparatus 70, the system controller 10 returns from Step F403 to Step F401.

In contrast, if the information managing unit 74 selects a certain piece of provided data and reads out the provided data from the image database 77, the server controller unit 72 proceeds to Step F506 to cause the communication unit 73 to transmit the provided data to the mobile card reader 1.
If the system controller 10 in the mobile card reader 1 receives the provided data from the server apparatus 70, the system controller 10 proceeds from Step F404 to Step F405 to perform display control of the provided data. Specifically, the system controller 10 causes the display unit 2 to perform the display based on the provided data received with the network communication unit 16.

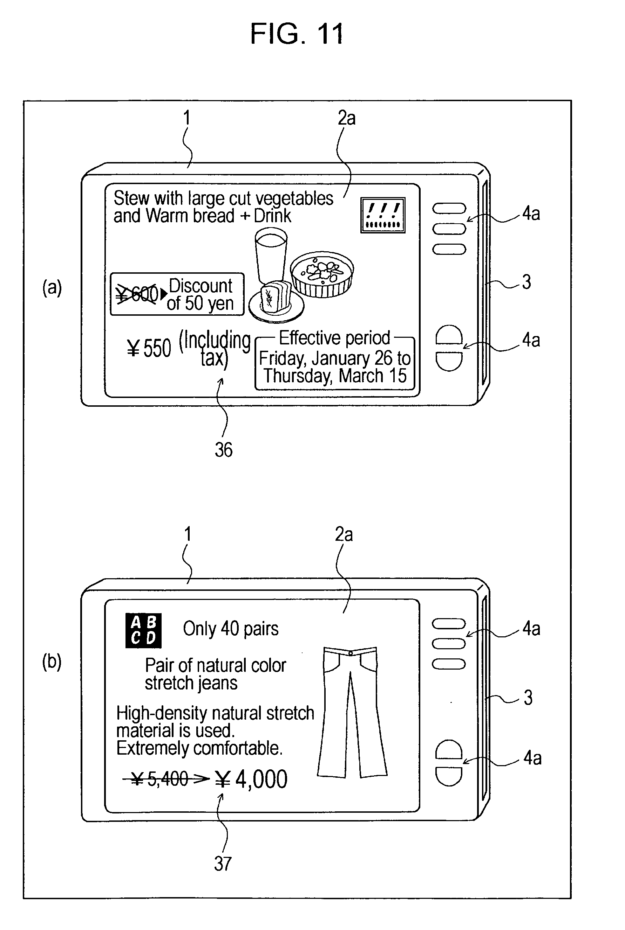

Figs. 11(a) and 11(b) show display examples based on the provided data. Fig. 11(a) shows an example in which a coupon image 36 provided as the provided data is displayed. And, Fig. 11(b) shows an example in which an article advertisement image 37 provided as the provided data is displayed.

Since the article advertisement or coupon for the shop or the like which is near the position where the user currently exists and where the non-contact IC card 90 carried by the user can be used is provided as the result of the above operation performed by the mobile card reader 1 and the server apparatus 70, it is possible to provide effective and timely information or service to the user of the mobile card reader 1.
Incidentally, the provided data is not restricted to the image data and may be character data. And, the content of the provided data is not restricted to the article advertisement or coupon. For example, a variety of content including information about a guide or a special service to the user of the non-contact IC card 90, an announcement of a new usage, and event information can be considered as the content of the provided data.

And, when the information managing unit 74 in the server apparatus 70 selects the provided data, the provided data indicating the advertisement or coupon corresponding to the current date and time may be selected by referring to the current date and time counted by the timer unit 76. For example, it is possible to select the provided data of the content, such as a time-limited bargain or discount information, based on the date and time.
And, information about the user of the mobile card reader 1 may be registered and managed in the server apparatus 70 to use the information for the selection of the provided data. For example, information indicating the gender, age, hobby, preference, etc. of the user is registered in association with the apparatus ID of the mobile card reader 1. In this case, when the information managing unit 74 selects the provided data, the gender, age, hobby, preference, etc. of the user can be determined from the apparatus ID to select the provided data of the content, such as the article advertisement, corresponding to the determined information. This allows provision of information corresponding to the preference, etc. of each user.

### [7. Advantages of embodiments and modification examples]

According to the mobile card reader 1 of the above embodiments, it is possible to improve the availability, the convenience, and the usefulness concerning the use of the non-contact IC card 90 which the user possesses.
First, when the non-contact IC card 90 is held in the mobile card reader 1, the type corresponding image of the non-contact IC card 90 that is held is displayed in the display unit 2. Accordingly, the user can immediately know the type of the non-contact IC card 90 that is held and there is no need to take the trouble to confirm the type, for example, when the user uses the non-contact IC card 90.
And, displaying the usage history of the non-contact IC card 90 along with the position information (such as the name of a shop) allows the user to more accurately confirm the usage history.
And, the provided data is received from the server apparatus 70 in accordance with the type and the current position of the non-contact IC card 90 held in the mobile card reader 1 and the received provided data is displayed in the mobile card reader 1. Accordingly, the user can timely receive the provided data useful for the user, such as data indicating the advertisement of a shop where the non-contact IC card 90 which the user possesses (which is held in the IC-card holding apparatus) can be used or the coupon for the shop.
These advantages allow the non-contact IC card 90 to be easily and conveniently used. And, the user having the multiple non-contact IC cards 90 can collectively hold the non-contact IC cards 90 in the mobile card reader 1 to improve the convenience.

The present invention is not restricted to the above embodiments and various modifications may be considered as configuration examples and process examples of the mobile card reader 1 and the server apparatus 70.
For example, the server apparatus 70 may transmit audio data or movie data to the mobile card reader 1 as the provided data. Preparing an audio output system at the side of the mobile card reader 1 allows the user to also enjoy the audio provided data.

## Claims

1. An IC-card holding apparatus **characterized by** comprising:
holding means for holding an non-contact IC card;
IC-card communication means for communicating with the non-contact IC card held in the holding means;
display means;
position detecting means for detecting position information; and
control means for causing the display means to display information generated on the basis of the position information detected by the position detecting means and information read out from the non-contact IC card held in the holding means by the IC-card communication means.

2. The IC-card holding apparatus according to Claim 1, **characterized in that** the holding means is capable of holding one or more non-contact IC cards.

3. The IC-card holding apparatus according to Claim 1, further comprising:
type-corresponding-image storage means for storing an image corresponding to each type of the non-contact IC card, the IC-card holding apparatus being **characterized in that**
the control means determines the type of the held non-contact IC card on the basis of the information read out from the non-contact IC card held in the holding means by the IC-card communication means and reads out an image corresponding to the determined type from the type-corresponding-image storage means to cause the display means to display the image.

4. The IC-card holding apparatus according to Claim 1, further comprising:
position-history storage means for storing position history information, the IC-card holding apparatus being **characterized in that**
the control unit causes the position-history storage means to store the position information detected by the position detecting means along with date and time information as the position history information, and **in that**
the control unit uses usage history information read out from the non-contact IC card held in the holding means by the IC-card communication means and the position history information stored in the position-history storage means to cause the display means to display a usage-history-information image to which the position information is added.

5. The IC-card holding apparatus according to Claim 1, further comprising:
position-history storage means for storing position history information; and
map-data storage means for storing map data, the IC-card holding apparatus being **characterized in that**
the control unit causes the position-history storage means to store the position information detected by the position detecting means along with date-and-tie information as the position history information, and **in that**
the control unit uses usage history information read out from the non-contact IC card held in the holding means by the IC-card communication means, the position history information stored in the position-history storage means, and the map data stored in the map-data storage means to cause the display means to display a use position of the non-contact IC card on a map image.

6. The IC-card holding apparatus according to Claim 1, further comprising:
external communication means for communicating with an external server apparatus, the IC-card holding apparatus being **characterized in that**
the control unit causes the external communication means to transmit a data request to the server apparatus, the data request at least including the position information detected by the position detecting means and type information about the non-contact IC card determined on the basis of information read out from the non-contact IC card held in the holding means by the IC-card communication means, and causes the display means to display an image based on provided data in response to reception of the provided data transmitted from the server apparatus in response to the data request by the external communication means.

7. An IC-card holding apparatus **characterized by** comprising:
holding means for holding a non-contact IC card;
IC-card communication means for communicating with the non-contact IC card held in the holding means;
display means;
type-corresponding-image storage means for storing an image corresponding to each type of the non-contact IC card; and
control means for determining the type of the held non-contact IC card on the basis of information read out from the non-contact IC card held in the holding means by the IC-card communication means and reading out an image corresponding to the determined type from the type-corresponding-image storage means to cause the display means to display the image.

8. A display method for an IC-card holding apparatus holding a non-contact IC card, the display method being **characterized by** comprising
a step of detecting position information;
a step of communicating with the non-contact IC card held in the holding means; and
a step of generating or acquiring information to be displayed on the basis of the position information and information read out through the communication with the non-contact IC card to display an image corresponding to the generated or acquired information.

9. A display method for an IC-card holding apparatus holding a non-contact IC card, the display method being **characterized by** comprising:
a step of communicating with the non-contact IC card held in the holding means;
a step of determining a type of the held non-contact IC card on the basis of information read out through the communication with the non-contact IC card; and
a step of displaying a type corresponding image corresponding to the determined type.

10. A data providing system including an IC-card holding apparatus and a server apparatus, the data providing system being **characterized in that**
the IC-card holding apparatus includes
holding means for holding an non-contact IC card;
IC-card communication means for communicating with the non-contact IC card held in the holding means;
display means;
position detecting means for detecting position information;
external communication means for communicating with the external server apparatus; and
control means for causing the external communication means to transmit a data request to the server apparatus, the data request at least including the position information detected by the position detecting means and type information about the non-contact IC card determined on the basis of information read out from the non-contact IC card held in the holding means by the IC-card communication means, and causing the display means to display an image based on provided data in response to reception of the provided data transmitted from the server apparatus in response to the data request by the external communication means, and **in that**
the server apparatus includes
communication means for communicating with the IC-card holding apparatus;
storage means for storing the provided data; and
control means for, in response to reception of the data request from the IC-card holding apparatus by the communication means, selecting a piece of provided data to be transmitted from the pieces of provided data stored in the storage means by using the position information and the type information included in the data request and causing the communication means to transmit the selected provided data to the IC-card holding apparatus.

11. A server apparatus **characterized by** comprising:
communication means;
storage means for storing provided data; and
control means for, in response to reception of a data request from an external apparatus by the communication means, selecting a piece of provided data to be transmitted from the pieces of provided data stored in the storage means by using position information and type information about a non-contact IC card included in the data request and causing the communication means to transmit the selected provided data to the external apparatus.

12. A data providing method **characterized by** comprising:
a step of receiving a data request from an external apparatus;
a step of selecting provided data to be transmitted by using position information and type information about a non-contact IC card included in the data request; and
a step of transmitting the selected provided data to the external apparatus.
